# FASCICULE DE BREVET EUROPEEN

(11) **EP 3 443 425 B1**
(45) Date de publication et mention de la délivrance du brevet: **08.07.2020**
(21) Numéro de dépôt: 17716269.0
(22) Date de dépôt: 12.04.2017
(51) Int. Cl.: G05B 23/02, H04L 29/08, G06F 11/08, H04L 12/40

(54) **PROCÉDÉ DE CONTRÔLE D'INTÉGRITÉ DE L'AVIONIQUE D'UN AÉRONEF, DISPOSITIF ET PRODUIT PROGRAMME D'ORDINATEUR ASSOCIÉS**
VERFAHREN ZUR PRÜFUNG DER INTEGRITÄT DER AVIONIK EINES FLUGZEUGS, ZUGEHÖRIGE VORRICHTUNG UND COMPUTERPROGRAMMPRODUKT
METHOD FOR TESTING THE INTEGRITY OF THE AVIONICS OF AN AIRCRAFT, ASSOCIATED DEVICE AND COMPUTER PROGRAM PRODUCT

(30) Priorité: 15.04.2016 FR 1600637
(43) Date de publication de la demande: 20.02.2019
(73) Titulaire: Thales, 92400 Courbevoie (FR)
(72) Inventeur: RAYROLE, Martin, 78140 VELIZY-VILLACOUBLAY (FR)
(74) Mandataire: Lavoix
(86) Numéro de dépôt international: PCT/EP2017/058844
(87) Numéro de publication internationale: WO 2017/178550

(56) Documents cités:
- WO-A2-2011/017063
- WO-A2-2011/017063
- US-A1- 2010 114 410
- US-A1- 2010 114 410
- US-B1- 6 208 955
- US-B1- 6 208 955

## Description

La présente invention concerne un procédé de contrôle d'intégrité de l'avionique d'un aéronef mise en œuvre par plusieurs systèmes avioniques embarqués.

La présente invention concerne également un dispositif et un produit programme d'ordinateur associés à ce procédé de contrôle.

On entend par « aéronef », un engin mobile apte à voler notamment dans l'atmosphère terrestre, tel qu'un avion ou un hélicoptère, ou encore un drone.

L'aéronef comporte notamment l'avionique utilisable pour son exploitation. On entend ainsi par « avionique », l'ensemble des équipements et des logiciels embarqués dans un aéronef et permettant son exploitation.

L'avionique est notamment mise en œuvre par plusieurs systèmes avioniques. On entend par « système avionique », un ou un plusieurs dispositifs au moins partiellement électroniques fournissant un service pour mettre en œuvre l'avionique.

De manière connue dans l'état de la technique, la sureté de l'aéronef est assurée en garantissant un haut niveau de disponibilité et d'intégrité de l'avionique.

Ce niveau peut être dégradé par un dysfonctionnement d'un ou plusieurs systèmes avioniques. On conçoit alors que cela peut conduire à la dégradation générale de la sureté de l'aéronef.

Pour prévenir de tels cas, il est connu d'utiliser différents mécanismes de surveillance des systèmes avioniques.

On connait par exemple de WO 2011/017063 A2 un procédé de contrôle d'intégrité de l'aéronef.

De manière générale, ces mécanismes de surveillance permettent de détecter une perte d'intégrité au moins d'une partie de l'avionique en analysant l'intégrité du ou de chaque système avionique embarqué.

Notamment, lorsqu'un dysfonctionnement d'un tel système avionique est détecté, une alerte indiquant une perte d'intégrité de la partie de l'avionique correspondante, est communiquée par exemple à l'équipage.

Toutefois, les mécanismes de surveillance existants ne sont pas complètement satisfaisants. En particulier, une perte d'intégrité d'au moins une partie de l'avionique peut se produire alors qu'aucun dysfonctionnement des systèmes avioniques correspondants n'a été détecté.

La présente invention a pour but d'améliorer les mécanismes de surveillance existants en détectant des incohérences entre plusieurs systèmes avioniques.

À cet effet, l'invention a pour objet un procédé, un produit programme d'ordinateur et un dispositif comme décrits par les revendications 1, 8 et 9, respectivement. Des modes de réalisations plus détaillés sont précisés dans les revendications dépendantes.

Ces caractéristiques et avantages de l'invention apparaitront à la lecture de la description qui va suivre, donnée uniquement à titre d'exemple non limitatif, et faite en référence aux dessins annexés, sur lesquels :
- la figure 1 est une vue schématique d'un aéronef comportant notamment un dispositif de contrôle selon l'invention ;
- la figure 2 est une vue détaillée du dispositif de contrôle de la figure 1 ; et
- la figure 3 est un organigramme d'un procédé de contrôle selon l'invention, le procédé étant mis en œuvre par le dispositif de contrôle de la figure 1.

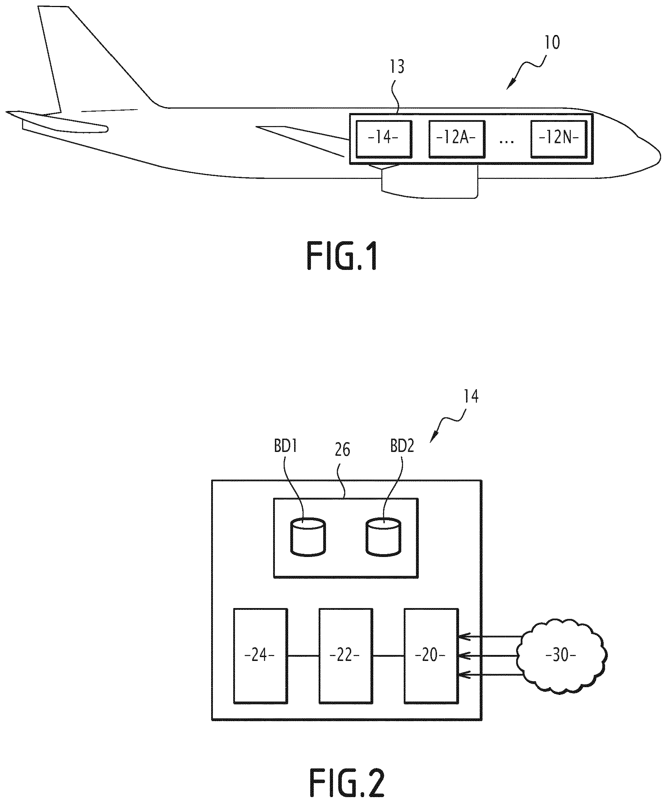

Dans l'exemple de réalisation de la figure 1, l'aéronef 10 est un avion apte à être exploité par au moins un pilote.

En variante, l'aéronef 10 est un hélicoptère, ou encore un drone.

L'aéronef 10 comporte notamment une avionique 13, composée notamment d'une pluralité de systèmes avioniques 12A à 12N mettant en œuvre l'avionique 13, et d'un dispositif de contrôle 14 selon l'invention.

Chaque système avionique 12A à 12N est apte à fournir un service.

L'avionique 13 permet d'exploiter au moins en partie l'aéronef 10 en utilisant les services fournis par les systèmes avioniques 12A à 12N.

À titre d'exemple de systèmes avioniques, on peut notamment citer un système de gestion de vol (FMS, de l'anglais « Flight Management System »), un système d'alerte de trafic et d'évitement de collision (TCAS, de l'anglais « Traffic Alert and Collision Avoidance System »), un système de freinage ou encore un système de pressurisation de la cabine.

Chaque système avionique est mis en œuvre par un ensemble d'équipements et de logiciels avioniques. À titre d'exemple d'équipements avioniques, on peut notamment citer des tubes de Pitot, un altimètre, une centrale inertielle, ou tout autre équipement fournissant un service.

Chaque système avionique 12A à 12N est apte à fournir à un instant donné au moins une donnée de vol. Une telle donnée de vol correspond à la valeur d'une variable de vol relative au fonctionnement et/ou à l'exploitation de l'aéronef 10.

À titre d'exemple de telles variables, on peut citer la pression statique à l'extérieur de l'aéronef 10 dont la valeur est fournie par les tubes de Pitot, l'altitude de l'aéronef dont la valeur est fournie par l'altimètre, ou encore des données de positionnement fournies par la centrale inertielle.

Chacune de ces variables prend par exemple des valeurs différentes lors des différentes périodes temporelles. Ces valeurs sont fournies sous la forme de données de vol par le système avionique 12A à 12N correspondant.

Ainsi, par exemple, les valeurs 3 000 ft, 5 000 ft et 10 000 ft fournies par l'altimètre à des instants différents présentent des données de vol correspondant à la variable « altitude de l'aéronef 10 ».

Parmi l'ensemble des systèmes avioniques 12A à 12N mettant en œuvre l'avionique 13, au moins deux systèmes sont distincts et opèrent de manière indépendante.

Cela signifie en particulier que ces deux systèmes n'interagissent pas l'un avec l'autre.

Le dispositif de contrôle 14 selon l'invention permet de contrôler l'intégrité de l'avionique 13 en mettant en œuvre un procédé de contrôle décrit par la suite.

Le dispositif de contrôle 14 est illustré plus en détail sur la figure 2.

Ainsi, en référence à cette figure 2, le dispositif de contrôle comporte un module de réception 20, un module d'échange 22, un module d'analyse 24 et un module de stockage 26.

Le dispositif de contrôle 14 se présente par exemple sous la forme d'un calculateur embarqué indépendant qui est apte à mettre œuvre une pluralité de logiciels.

En variante, le dispositif de contrôle 14 est un calculateur embarqué mettant également en œuvre un ou plusieurs services avioniques.

Dans les deux cas, les modules de réception 20 et d'analyse 24 se présentent sous la forme de logiciels mis en œuvre par un tel calculateur, et les modules d'échange 22 et de stockage 26 se présentent respectivement sous la forme d'une mémoire vive et d'une mémoire morte de ce calculateur.

Selon d'autres exemples de réalisation, les modules 20 à 24 se présentent sous la forme d'unités physiques telles que des circuits électroniques dédiés (ASIC) ou des circuits logiques programmables du type FPGA (de l'anglais « Field-Programmable Gate Array »).

Le module de réception 20 est relié aux systèmes avioniques 12A à 12N via un réseau de communication avionique 30.

Le module de réception 20 est apte à recevoir les données de vol fournies par les systèmes avioniques 12A à 12N via le réseau de communication avionique 30.

Le réseau de communication avionique 30 est par exemple configuré pour dupliquer chaque donnée de vol utile au module d'analyse 24 et circulant dans ce réseau de communication avionique 30 pour l'envoyer systématiquement vers le module de réception 20.

Le module de réception 20 est apte à traiter les données de vol reçues selon une étape du procédé décrite par la suite et à stocker les données de vol traitées au moins temporairement dans le module d'échange 22.

Le module d'analyse 24 est apte à déterminer la cohérence entre les données de vol stockées dans le module d'échange 22 selon une étape du procédé décrite par la suite. Lorsque le module d'analyse 24 détermine que des données sont incohérentes, il est apte à générer une alarme.

Le module de stockage 26 stocke une première base de données BD₁ et une deuxième base de données BD₂.

La première base de données BD₁ comporte un arbre de dépendances. Cet arbre de dépendances inclut, pour chaque variable de vol, une liste de variables de vol dont cette variable dépend directement.

Autrement dit, pour chaque variable de vol, cet arbre de dépendances définit l'ensemble des variables utilisées pour calculer cette variable.

Ainsi, par exemple, pour la variable de vol correspondant à la vitesse de l'aéronef 10, l'arbre de dépendances de la première base de données BD₁ définit la liste de variables comportant la pression statique et la pression dynamique à l'extérieur de l'aéronef 10 ainsi que la masse volumique de l'air à l'altitude courante de l'aéronef 10.

La deuxième base de données BD₂ comporte une liste de règles de cohérence permettant de vérifier la cohérence des données de vol.

En particulier, chaque règle de cohérence présente une relation reliant différentes variables entre elles et/ou les valeurs d'une même variable lors des différentes périodes temporelles, notamment lors des différentes périodes de contrôle Pᵢ définies par la suite.

Une règle est vérifiée si la relation correspondante est vérifiée après la substitution des variables de vol associées à cette règle par les données de vol correspondant à ces variables. Dans le contraire, la règle n'est pas vérifiée.

La première et la deuxième bases de données BD₁, BD₂ sont définies par exemple de manière prédéterminée lors de la conception de l'aéronef 10 et peuvent être mises à jour lors par exemple d'une opération de maintenance.

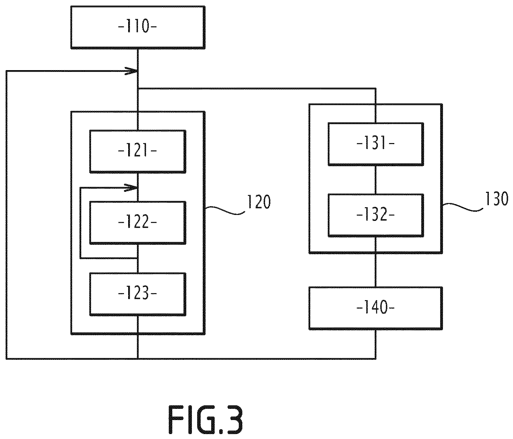

Le procédé de contrôle d'intégrité de l'avionique 13 mis en œuvre par le dispositif de contrôle 14 va désormais être expliqué en référence à la figure 3 illustrant un organigramme de ses étapes.

Lors d'une étape initiale 110, une pluralité de périodes de contrôle Pᵢ est déterminée. Chaque période de contrôle Pᵢ comprend un intervalle temporel pour lequel la cohérence des données de vol est déterminée.

Les périodes de contrôle Pᵢ comprennent des intervalles temporels consécutifs de même durée. Cette durée est par exemple égale à une seconde.

L'étape initiale 110 est par exemple mise en œuvre une fois lors de la phase de conception du dispositif de contrôle 14.

Les étapes suivantes du procédé sont répétées par chaque période de contrôle courante Pᵢ.

L'étape de collecte 120 consiste à recevoir des données de vol issues d'au moins deux systèmes avioniques 12A à 12N distincts et opérant de manière indépendante, et pour chaque nouvelle donnée de vol, à figer les données de vol déjà reçues qui correspondent à des variables de vol dont dépend la variable de vol correspondant à cette nouvelle donnée de vol.

En particulier, l'étape de collecte 120 comprend plusieurs sous-étapes.

Lors de la sous-étape 121 initiale, le module de réception 20 détermine, à l'aide de la première base de données BD₁, une liste de variables de vol dont les valeurs sont attendues lors de la période de contrôle courante Pᵢ.

Puis, à partir de cette liste de variables de vol, le module de réception 20 forme une liste de données de vol attendues A.

Puis, le module de réception 20 associe à chaque donnée de vol de la liste A, un indicateur de réception et un indicateur de modification.

Chacun de ces indicateurs est apte à prendre la valeur de l'un des états parmi un état positif et un état négatif.

L'indicateur de réception est dans l'état positif si la donnée de vol à laquelle il est associé a été déjà reçue lors de la période de contrôle courante Pᵢ. Dans le cas contraire, l'indicateur de réception est dans l'état négatif.

L'indicateur de modification est dans l'état positif si le module de réception 20 est autorisé à modifier la donnée de vol à laquelle cet indicateur est associé. Dans le cas contraire, l'indicateur de modification est dans l'état négatif.

Lors de cette sous-étape 121, l'indicateur de réception de chaque donnée de vol de la liste de données de vol attendues A est mis dans l'état négatif.

Lors de cette sous-étape 121, l'indicateur de modification de chaque donnée de vol de la liste de données de vol attendues A est mis dans l'état positif si la variable de vol correspondant à cette donnée de vol ne dépend d'aucune autre variable de vol. Dans le cas contraire, cet indicateur est mis dans l'état négatif.

La sous-étape 122 suivante est mise en œuvre à chaque acquisition d'une nouvelle donnée de vol pendant la période de contrôle courante Pᵢ.

En particulier, lors de cette sous-étape 122, le module de réception 20 détermine l'indicateur de réception et l'indicateur de modification de la nouvelle donnée de vol acquise.

Lorsque l'état de l'indicateur de réception de la nouvelle donnée de vol est positif et lorsque l'état de l'indicateur de modification de cette donnée est négatif, le module de réception 20 rejette la nouvelle donnée de vol.

Lorsque l'état de l'indicateur de réception de cette donnée de vol est négatif ou lorsque l'état de l'indicateur de modification de cette donnée est positif, le module de réception 20 détermine une liste de dépendances L comportant une pluralité de données de vol.

Chaque donnée de vol de cette liste L est choisie de sorte que la variable de vol correspondant à la nouvelle donnée de vol dépend de la variable de vol correspondant à cette donnée de vol choisie.

Cette liste de dépendances L est établie en utilisant la première base de données BD₁.

Lorsque l'état de l'indicateur de réception de chaque donnée de la liste de dépendances L est positif, le module de réception 20 remplace la donnée de vol dans la liste de données de vol attendues A correspondant à la même variable de vol que la nouvelle donnée de vol, par cette nouvelle donnée de vol.

Puis, le module de réception 20 associe l'état positif à l'indicateur de réception de la nouvelle donnée de vol et associe l'état négatif à l'indicateur de modification de chaque donnée de vol de la liste de dépendances L.

Lors de la sous-étape finale 123 de l'étape 120 mise en œuvre après l'expiration de la période de contrôle courante Pᵢ, le module de réception transmet l'ensemble des données de vol collectées lors de la période courante de contrôle Pᵢ, au module d'échange 22. Lors de cette même sous-étape 123, le module de réception transmet également l'indicateur de réception de chaque donnée de vol collectée, au module d'échange 22.

L'étape d'analyse 130 mise en œuvre en parallèle avec l'étape 120, consiste à analyser la cohérence entre les données de vol collectées lors de la période de contrôle précédente Pᵢ₋₁, et/ou entre les données de vol collectées lors de la période de contrôle précédente Pᵢ₋₁ et des données de vol collectées lors d'au moins une période de contrôle antérieure Pᵢ₋₁₋ₙ.

Cette étape est mise en œuvre en vérifiant chaque règle de cohérence de la deuxième base de donnée BD₂.

En particulier, l'étape d'analyse 130 comprend plusieurs sous-étapes.

Lors de la sous-étape 131 initiale, le module d'analyse 24 associe à chaque variable de vol un indicateur d'intégrité.

De manière analogue aux indicateurs de réception et de modification, deux états, à savoir un état positif et un état négatif, sont définis pour l'indicateur d'intégrité.

Un indicateur d'intégrité est dans l'état positif lorsqu'aucune perte d'intégrité n'a été détectée pour les données de vol correspondant à la variable à laquelle cet indicateur d'intégrité est associé. Dans le cas contraire, l'indicateur d'intégrité est dans l'état négatif.

Lors de cette sous-étape 131, l'indicateur d'intégrité de chaque variable de vol est mis à l'état positif.

Lors de la sous-étape 132 suivante, le module d'analyse 24 parcourt l'ensemble des règles de cohérence dans l'ordre où elles ont été définies dans la deuxième base de donnée BD₂ et, pour chaque règle de cohérence, détermine la liste de variables de vol V associées à cette règle.

Lorsque l'état de l'indicateur d'intégrité de chaque variable de vol de la liste V est positif et lorsque l'état de l'indicateur de réception de la donnée de vol correspondant à cette variable de vol est positif, le module d'analyse 24 vérifie la règle de cohérence en substituant chaque variable de cette règle par la donnée de vol correspondante. Chaque donnée de vol est issue du module d'échange 22.

Comme indiqué précédemment, chaque règle permet de vérifier la cohérence des données de vol issues d'une même période temporelle et/ou de périodes temporelles distinctes. Ainsi, lorsqu'il s'agit de plusieurs périodes temporelles, le module d'analyse 24 substitue les variables par des données de vol reçues lors de la période de contrôle précédente Pᵢ₋₁ et lors d'au moins une période de contrôle antérieure Pᵢ₋₁₋ₙ.

Puis, le module d'analyse 24 détermine si la règle est vérifiée ou non. Lorsque la règle n'est pas vérifiée, le module d'analyse 24 associe l'état négatif à l'indicateur d'intégrité de chaque variable de vol de la liste V.

Selon une variante de réalisation, le module d'analyse 24 vérifie les règles de cohérence selon un ordre de vérification prédéterminé. Cet ordre correspond par exemple à l'ordre croissant du nombre de variables associées à chaque règle.

Lors de l'étape 140 suivante mise en œuvre également en parallèle avec l'étape 120, lorsqu'au moins une des règles de cohérence n'a pas été vérifiée lors de l'étape 130 précédente, le module d'analyse 24 génère un message d'alerte relatif à une perte d'intégrité de l'avionique 13 ou au moins d'une partie de celle-ci.

En complément, lors de la même étape, l'ensemble des variables de vol dont les indicateurs d'intégrités ont des états négatifs est transmis dans le message d'alerte.

Le message d'alerte est ensuite par exemple communiqué à un pilote de l'aéronef 10 ou à un autre système avionique de cet aéronef 10.

On conçoit alors que la présente invention comporte un certain nombre d'avantages.

L'intégrité de l'avionique est déterminée en analysant la cohérence des données de vol utilisables par l'avionique. Ces données de vol sont issues de systèmes avioniques distincts et opérant de manière indépendante. Ainsi, lorsqu'un dysfonctionnement d'un système avionique n'a pas été détecté par des mécanismes de surveillance conventionnels, il est possible de détecter un tel dysfonctionnement en analysant la cohérence de données de vol produites par ce système lors des périodes de contrôle différentes ou/et la cohérence de ces données avec des données produites par d'autres systèmes avioniques.

De plus, le procédé selon l'invention communique l'ensemble des variables dont les valeurs sont incohérentes. Ceci simplifie l'identification du dysfonctionnement survenu et éventuellement, la recherche d'une solution pour revenir à la situation normale.

## Revendications

1. Procédé de contrôle d'intégrité de l'avionique d'un aéronef (10) mise en œuvre par plusieurs systèmes avioniques (12A,...,12N) embarqués, chaque système avionique (12A,...,12N) étant apte à fournir à un instant donné au moins une donnée de vol correspondant à la valeur d'une variable de vol relative au fonctionnement et/ou à l'exploitation de l'aéronef (10) ;
le procédé comportant les étapes suivantes :
- définir (110) une pluralité de périodes de contrôle (Pᵢ) ;
- pour chaque période de contrôle courante (Pᵢ) :
+ collecter (120) des données de vol issues d'au moins deux systèmes avioniques distincts (12A,...,12N) et opérant de manière indépendante, l'étape de collecte (120) des données de vol consistant à acquérir des données de vol issues d'au moins deux systèmes avioniques distincts (12A,...,12N) et opérant de manière indépendante, et pour chaque nouvelle donnée de vol acquise, à figer les données de vol déjà reçues qui correspondent à des variables de vol dont dépend la variable de vol correspondant à cette nouvelle donnée de vol ;
+ analyser (130) la cohérence entre les données de vol collectées lors de la période de contrôle précédente (Pᵢ₋₁), et/ou entre les données de vol collectées lors de la période de contrôle précédente (Pᵢ₋₁) et des données de vol collectées lors d'au moins une période de contrôle antérieure (Pᵢ₋₁₋ₙ), en vérifiant une pluralité de règles de cohérence prédéterminées, chaque règle reliant au moins certaines des variables de vol entre elles, la vérification de chaque règle étant effectuée en substituant les variables de vol associées à cette règle par les données de vol correspondant à ces variables ;
+ lorsqu'au moins une de ces règles n'est pas vérifiée, générer (140) une alerte relative à une perte d'intégrité de l'avionique.

2. Procédé selon la revendication 1, dans lequel lors de l'étape d'analyse (130) de la cohérence, la vérification des règles est effectuée selon un ordre de vérification prédéterminé.

3. Procédé selon la revendication 2, dans lequel l'ordre de vérification des règles de cohérence correspond à l'ordre croissant du nombre de variables de vol associées à ces règles.

4. Procédé selon l'une quelconque des revendications précédentes, dans lequel l'étape de collecte (120) des données de vol comprend les sous-étapes suivantes :
- initialiser (121) l'étape de collecte (120) en déterminant une liste de données de vol attendues (A) et en associant à chaque donnée de vol de cette liste (A) un indicateur de réception avec un état négatif et un indicateur de modification avec un état positif lorsque la variable de vol correspondant à cette donnée de vol ne dépend d'aucune autre variable de vol, et avec une un état négatif autrement ;
- mettre (122) en oeuvre la réception des données de vol issues d'au moins deux systèmes avioniques distincts (12A,...,12N) et opérant de manière indépendante, et à l'acquisition de chaque nouvelle donnée de vol et lorsque l'état de l'indicateur de réception de cette donnée de vol est négatif ou lorsque l'état de l'indicateur de modification de cette donnée est positif, faire comme suit :
+ déterminer une liste de dépendances (L) comportant une pluralité de données de vol dont chaque donnée de vol est choisie de sorte que la variable de vol correspondant à la nouvelle donnée de vol dépend de la variable de vol correspondant à cette donnée de vol choisie ;
+ lorsque l'état de l'indicateur de réception de chaque donnée de la liste de dépendances (L) est positif, mémoriser la nouvelle donnée de vol, associer l'état positif pour l'indicateur de réception de la nouvelle donnée de vol et associer l'état négatif pour l'indicateur de modification de chaque données de vol de la liste de dépendances (L).

5. Procédé selon la revendication 4, dans lequel l'étape d'analyse (130) des données de vol comprend les sous-étapes suivantes :
- initialiser (131) l'étape d'analyse (130) des données de vol en associant à chaque variable de vol un indicateur d'intégrité avec un état positif ;
- parcourir (132) l'ensemble des règles de cohérence et pour chaque règle de cohérence, lorsque l'état de l'indicateur d'intégrité de chaque variable de vol associée à cette règle est positif et lorsque l'état de l'indicateur de réception de la donnée de vol correspondant à cette variable de vol est positif, faire comme suit :
+ vérifier la règle de cohérence en substituant chaque variable de cette règle par la donnée de vol correspondante ; et
+ si la règle n'est pas vérifiée, associer l'état négatif à l'indicateur d'intégrité de chaque variable de vol associée à cette règle de cohérence.

6. Procédé selon la revendication 5, dans lequel l'étape de génération d'alerte (140) lorsque au moins une règle de cohérence n'est pas vérifiée, comprend la communication de l'ensemble des variables de vol dont les indicateurs d'intégrité ont des états négatifs.

7. Procédé selon l'une quelconque des revendications 4 à 6, dans lequel la dépendance entre les variables de vol est déterminée en utilisant un arbre de dépendances prédéterminé.

8. Produit programme d'ordinateur comportant des instructions logicielles qui, lorsque mis en œuvre par un équipement informatique, met en œuvre le procédé selon l'une quelconque des revendications précédentes.

9. Dispositif (14) de contrôle d'intégrité de l'avionique d'un aéronef (10) mise en oeuvre par plusieurs systèmes avioniques (12A,...,12N) embarqués, chaque système avionique (12A,...,12N) étant apte à fournir à un instant donné au moins une donnée de vol correspondant à la valeur d'une variable de vol relative au fonctionnement et/ou à l'exploitation de l'aéronef (10) ;
le dispositif (14) étant apte à :
- définir une pluralité de périodes de contrôle (Pᵢ) ;
- pour chaque période de contrôle courante (Pᵢ) :
+ collecter des données de vol issues d'au moins deux systèmes avioniques distincts (12A,...,12N) et opérant de manière indépendante, le dispositif (14) étant apte à acquérir des données de vol issues d'au moins deux systèmes avioniques distincts (12A,...,12N) et opérant de manière indépendante, et pour chaque nouvelle donnée de vol acquise, à figer les données de vol déjà reçues qui correspondent à des variables de vol dont dépend la variable de vol correspondant à cette nouvelle donnée de vol ;
+ analyser la cohérence entre les données de vol collectées lors de la période de contrôle précédente (Pᵢ₋₁), et/ou entre les données de vol collectées lors de la période de contrôle précédente (Pᵢ₋₁) et des données de vol collectées lors d'au moins une période de contrôle antérieure (Pᵢ₋₁₋ₙ), en vérifiant une pluralité de règles de cohérence prédéterminées, chaque règle reliant au moins certaines des variables de vol entre elles, la vérification de chaque règle étant effectuée en substituant les variables de vol associées à cette règle par les données de vol correspondant à ces variables ;
+ lorsqu'au moins une de ces règles n'est pas vérifiée, générer une alerte.

## Patentansprüche

1. Verfahren zum Überwachen der Integrität der Bordelektronik eines Luftfahrzeugs (10), durchgeführt von mehreren mitgeführten luftfahrttechnischen Systemen (12A, ..., 12N), wobei jedes technische System (12A, ..., 12N) geeignet ist, zu einem gegebenen Zeitpunkt mindestens ein Flugdatenelement entsprechend dem Wert einer Flugvariablen bezüglich der Funktionsweise und/oder des Betriebes des Flugzeugs (10) zu liefern;
wobei das Verfahren die folgenden Schritte aufweist:
- Definieren (110) einer Mehrzahl von Überwachungsperioden (Pᵢ);
- für jeder aktuelle Überwachungsperiode (Pᵢ):
+ Sammeln (120) von Flugdaten, die von mindestens zwei unterschiedlichen und unabhängig voneinander arbeitenden flugtechnischen Systemen (12A, ... 12N) stammen, wobei der Sammelschritt (120) der Flugdaten darin besteht, Flugdaten zu beschaffen, die von mindestens zwei unterschiedlichen und in unabhängiger Weise arbeitenden flugtechnischen Systemen (12A, ..., 12N) stammen, und für jedes neue beschaffte Flugdatenelement die schon empfangenen Flugdaten, die Flugvariablen entsprechen, von denen die Flugvariable entsprechend diesem neuen Flugdatenelement abhängt, zu festigen;
+ Analysieren (130) der Übereinstimmung zwischen den während der vorhergehenden Überwachungsperioden (Pᵢ₋₁) gesammelten Flugdaten und/oder zwischen Flugdaten, die während der vorhergehenden Überwachungsperiode (Pᵢ₋₁) gesammelt wurden, und Flugdaten, die während mindestens einer früheren Überwachungsperiode (Pᵢ₋₁₋ₙ) gesammelt wurden, wobei eine Mehrzahl von vorbestimmten Übereinstimmungsregeln geprüft werden, wobei jede Regel mindestens einige der Flugvariablen untereinander verbindet, wobei die Überprüfung jeder Regel durch Substituieren der dieser Regel zugeordneten Flugvariablen durch die diesen Variablen entsprechenden Flugdaten durchgeführt wird;
+ wenn mindestens eine dieser Regel nicht verifiziert wird, Erzeugen (140) einer Warnmeldung bezüglich eines Verlustes der Integrität der Bordelektronik.

2. Verfahren nach Anspruch 1, bei dem bei dem Schritt des Analysierens (130) der Übereinstimmung die Überprüfung der Regeln nach einer vorbestimmten Überprüfungsreihenfolge durchgeführt wird.

3. Verfahren nach Anspruch 2, bei dem die Überprüfungsreihenfolge der Übereinstimmungsregeln der aufsteigenden Reihenfolge der Anzahl der diesen Regeln zugeordneten Variablen entspricht.

4. Verfahren nach einem beliebigen der vorhergehenden Ansprüche, bei dem der Schritt des Sammelns (120) von Flugdaten die folgenden Unterschritte umfasst:
-- Initialisieren (121) des Sammelschritts (120) durch Bestimmen einer Liste von erwarteten Flugdaten (A) und durch Zuordnen zu jedem Datenelement dieser Liste (A) eines Empfangsindikators mit einem negativen Status und eines Änderungsindikators mit einem positiven Status, wenn die diesem Flugdatenelement entsprechende Flugvariable nicht von irgend einer anderen Flugvariablen abhängt, und ansonsten mit einem negativen Status;
- Durchführen (122) des Empfangs der von mindestens zwei unterschiedlichen und in unabhängiger Weise arbeitenden luftfahrttechnischen Systemen (12A, ..., 12N) stammenden Flugdaten und bei der Beschaffung jedes neuen Flugdatenelementes und wenn der Status des Empfangsindikators dieses Flugdatenelementes negativ ist oder wenn der Status des Änderungsindikators dieses Datenelementes positiv ist, Ausführen wie folgt:
+ Bestimmen einer Liste von Abhängigkeiten (L), die eine Mehrzahl von Flugdaten aufweist, von denen jedes Flugdatenelement so ausgewählt wird, dass die dem neuen Flugdatenelement entsprechende Flugvariable von der Flugvariablen entsprechend diesem ausgewählten Flugdatenelement abhängt;
+ wenn der Status des Empfangsindikators jedes Datenelementes der Liste der Abhängigkeiten (L) positiv ist, Speichern des neuen Flugdatenelementes, Zuordnen des positiven Status für den Empfangsindikator des neuen Flugdatenelementes und Zuordnen des negativen Status für den Änderungsindikator jedes Flugdatenelementes der Liste der Abhängigkeiten (L).

5. Verfahren nach Anspruch 4, bei dem Schritt des Analysierens (130) der Flugdaten die folgenden Unterschritte umfasst:
- Initialisieren (131) des Schrittes der Analyse (130) der Flugdaten durch Zuordnen eines Integritätsindikators mit einem positiven Status zu jedem dem Flugdatenelement;
- Durchlaufen (132) der Gesamtheit der Übereinstimmungsregeln und für jede Übereinstimmungsregel, wenn der Status des Integritätsindikators jedes dieser Regel zugeordneten Flugdatenelementes positiv ist und wenn der Status des Empfangsindikators des dieser Flugvariablen entsprechenden Flugdatenelementes positiv ist, Ausführen wie folgt:
+ Überprüfen der Übereinstimmungsregel durch Substituieren jede Variable dieser Regel durch das entsprechende Flugdatenelement; und
+ wenn die Regel nicht verifiziert wird, Zuordnen des negativen Status zu dem Integritätsindikator jeder dieser Übereinstimmungsregel zugeordneten Flugvariablen.

6. Verfahren nach Anspruch 5, bei dem, wenn mindestens eine Übereinstimmungsregel nicht verifiziert wird, der Schritt des Erzeugens einer Warnmeldung (140) das Kommunizieren der Gesamtheit der Flugvariablen, deren Integritätsindikator negative Status haben, umfasst.

7. Verfahren nach einem beliebigen der Ansprüche 4 bis 6, bei dem die Abhängigkeit zwischen den Flugvariablen unter Verwendung eines vorbestimmten Abhängigkeitsbaumes bestimmt wird.

8. Programmprodukt für einen Rechner, das Softwarebefehle aufweist, die, wenn sie von einer Hardware ausgeführt werden, das Verfahren nach einem beliebigen der vorhergehenden Ansprüche durchführen.

9. Vorrichtung zum Überwachen der Integrität der Bordelektronik eines Luftfahrzeugs (10), durchgeführt von mehreren mitgeführten luftfahrttechnischen Systemen (12A, ..., 12N), wobei jedes lufttechnische System (12A, ..., 12N) geeignet ist, zu einem gegebenen Zeitpunkt mindestens ein Flugdatenelement entsprechend dem Wert einer Flugvariablen bezüglich der Funktionsweise und/oder des Betriebes des Flugzeugs (10) zu liefern;
wobei die Vorrichtung geeignet ist zum:
- Definieren (110) einer Mehrzahl von Überwachungsperioden (Pᵢ);
- für jeder aktuelle Überwachungsperiode (Pᵢ):
+ Sammeln (120) von Flugdaten, die von mindestens zwei unterschiedlichen und unabhängig voneinander arbeitenden flugtechnischen Systemen (12A, ... 12N) stammen, wobei die Vorrichtung (14) geeignet ist, Flugdaten zu beschaffen, die von mindestens zwei unterschiedlichen und in unabhängiger Weise arbeitenden flugtechnischen Systemen (12A, ..., 12N) stammen, und für jedes neue beschaffte Flugdatenelement die schon empfangenen Flugdaten, die Flugvariablen entsprechen, von denen die Flugvariable entsprechend diesem neuen Flugdatenelement abhängt, zu festigen;
+ Analysieren (130) der Übereinstimmung zwischen den während der vorhergehenden Überwachungsperioden (Pᵢ₋₁) gesammelten Flugdaten und/oder zwischen Flugdaten, die während der vorhergehenden Überwachungsperiode (Pᵢ₋₁) gesammelt wurden, und Flugdaten, die während mindestens einer früheren Überwachungsperiode (Pᵢ₋₁₋ₙ) gesammelt wurden, wobei eine Mehrzahl von vorbestimmten Übereinstimmungsregeln geprüft werden, wobei jede Regel mindestens einige der Flugvariablen untereinander verbindet, wobei die Überprüfung jeder Regel durch Substituieren der dieser Regel zugeordneten Flugvariablen durch die diesen Variablen entsprechenden Flugdaten durchgeführt wird;
+ wenn mindestens eine dieser Regel nicht verifiziert wird, Erzeugen (140) einer Warnmeldung.

## Claims

1. A method for testing the integrity of the avionics of an aircraft (10) implemented by several on board avionics systems (12A,..., 12N), each avionics system (12A,..., 12N) being capable of providing, at a given moment, at least one flight datum corresponding to the value of a flight variable relative to the operation and/or the exploitation of the aircraft (10);
the method including the following steps:
- defining (110) a plurality of test periods (Pᵢ);
- for each current test period (Pᵢ):
+ collecting (120) flight data from at least two separate avionics systems (12A,..., 12N) operating independently, the flight data collection step (120) consists of acquiring flight data from at least two separate avionics systems (12A,...,12N) operating independently, and for each new acquired flight datum, freezing the flight data already received that correspond to flight variables on which the flight variable corresponding to said new flight datum depends;
+ analyzing (130) the consistency between the flight data collected during the previous test period (Pᵢ₋₁), and/or between the flight data collected during the previous test period (Pᵢ₋₁) and flight data collected during at least one earlier test period (Pᵢ₋₁₋ₙ), while checking a plurality of predetermined consistency rules, each rule linking at least some of the flight variables to one another, the checking of each rule being done by replacing the flight variables associated with said rule with the flight data corresponding to said variables;
+ when at least one of these rules is not verified, generating (140) an alert relative to a loss of integrity of the avionics.

2. The method according to claim 1, wherein during the consistency analysis step (130), the verification of the rules is done according to a predetermined verification order.

3. The method according to claim 2, wherein the verification order of the consistency rules corresponds to the increasing order of the number of flight variables associated with said rules.

4. The method according to any one of the preceding claims, wherein the collection step (120) includes the following sub-steps:
- initializing (121) the collection step (120) by determining a list of expected flight data (A) and associating, with each flight datum of this list (A), a reception indicator with a negative state and a change indicator with a positive state when the flight variable corresponding to said flight datum does not depend on any other flight variable, and with a negative state otherwise;
- implementing (122) the reception of flight data from at least two separate avionics systems (12A,...,12N) operating independently, and acquiring each new flight datum and when the reception indicator of said flight datum is negative or when the state of the change indicator of this datum is positive, doing the following:
+ determining a list of dependencies (L) comprising a plurality of flight data whereof each flight datum is chosen such that the flight variable corresponding to the new flight datum depends on the flight variable corresponding to said chosen flight datum;
+ when the state of the reception indicator of each datum from the list of dependencies (L) is positive, storing the new flight datum, associating the positive state for the reception indicator of the new flight datum and associating the negative state for the change indicator of each flight datum of the list of dependencies (L).

5. The method according to claim 4, wherein the step (130) for analyzing the flight data includes the following sub-steps:
- initializing (131) the flight data analysis step (130) by associating, with each flight variable, an integrity indicator with a positive state;
- going through (132) all of the consistency rules, and for each consistency rule, when the state of the integrity indicator of each flight variable associated with said rule is positive and when the state of the reception indicator of the flight datum corresponding to said flight variable is positive, doing the following:
+ verifying the consistency rule by replacing each variable of said rule with the corresponding flight datum; and
+ if the rule is not verified, associating the negative state with the integrity indicator of each flight variable associated with said consistency rule.

6. The method according to claim 5, wherein the alert generation step (140) when at least one consistency rule is not verified includes communicating the set of flight variables whose integrity indicators have negative states.

7. The method according to any one of claims 4 to 6, wherein the dependency between the flight variables is determined by using a predetermined dependency tree.

8. A computer program product including software instructions which, when executed by computer equipment, carry out the method according to any one of the preceding claims.

9. A device for testing the integrity of the avionics of an aircraft (10) implemented by several on board avionics systems (12A,..., 12N), each avionics system (12A,..., 12N) being capable of providing, at a given moment, at least one flight datum corresponding to the value of a flight variable relative to the operation and/or the exploitation of the aircraft (10);
the device (14) being able to:
- defining a plurality of test periods (Pᵢ);
- for each current test period (Pᵢ):
+ collecting flight data from at least two separate avionics systems (12A,...,12N) operating independently, the device (14) being able to acquire the flight data from at least two separate avionics systems (12A,...,12N) operating independently, and for each new acquired flight datum, to freeze the flight data already received that correspond to flight variables on which the flight variable corresponding to said new flight datum depends;
+ analyzing the consistency between the flight data collected during the previous test period (Pᵢ₋₁), and/or between the flight data collected during the previous test period (Pᵢ₋₁) and flight data collected during at least one earlier test period (Pᵢ₋₁₋ₙ), while checking a plurality of predetermined consistency rules, each rule linking at least some of the flight variables to one another, the checking of each rule being done by replacing the flight variables associated with said rule with the flight data corresponding to said variables;
+ when at least one of these rules is not verified, generating an alert.
